# EUROPÄISCHE PATENTSCHRIFT

(11) **EP 2 707 698 B1**
(45) Veröffentlichungstag und Bekanntmachung des Hinweises auf die Patenterteilung: **10.11.2021**
(21) Anmeldenummer: 12717162.7
(22) Anmeldetag: 20.03.2012
(51) Int. Cl.: G01N 21/359, G01N 21/35, G01N 33/10, G01N 21/85, G01N 21/47, G01N 21/3563

(54) **NIR-MESSGERÄT**
NIR MEASURING DEVICE
APPAREIL DE MESURE NIR

(30) Priorität: 13.05.2011 DE 102011050362
(43) Veröffentlichungstag der Anmeldung: 19.03.2014
(73) Patentinhaber: Büchi Labortechnik AG, 9230 Flawil 1 (CH)
(72) Erfinder: Schneider, Thomas, 69207 Sanhausen (DE); Qvarfort, Tomas, 69168 Wiesloch (DE)
(74) Vertreter: Christ, Niko
(86) Internationale Anmeldenummer: PCT/DE2012/100069
(87) Internationale Veröffentlichungsnummer: WO 2012/155893

(56) Entgegenhaltungen:
- EP-A1- 0 590 487
- DE-U1-202005 001 438
- US-A- 4 803 365
- US-A1- 2003 090 666
- US-A1- 2008 212 077

## Beschreibung

Die vorliegende Erfindung betrifft ein Messgerät zur Erfassung von Kenngrößen eines in einem Produktionsbehälter aufgenommenen Produkts, mit einer über einen, vorzugsweise standardisierten, Zugang des Produktionsbehälters mit diesem verbindbaren, in Form einer in den Zugang einführbaren Hohlröhre gestalteten Sonde, wobei der Sonde auf einer von dem Produktionsbehälter abgewandten Seite eine Lichtquelle sowie ein Messaufnehmer zugeordnet sind und von der Lichtquelle emittiertes Licht durch die Hohlröhre und ein der Hohlröhre auf einer in den Produktionsbehälter einzuführenden Seite angeordnetes, endständiges Fenster in Form einer transparenten, planparallelen Platte hindurch geleitet wird und zumindest teilweise zurück durch das endständige Fenster und die Hohlröhre auf den Messaufnehmer reflektiert wird.

Ein derartiges Messgerät zur Erfassung einer Fluoreszenz ist bereits aus der US 4,803,365 vorbekannt. Als weiterer Stand der Technik sind die Schriften US 2008/0212077 A1, EP 0 590 487 A1, US 2003/0090666 A1 und die DE 20 2005 001 438 U1 zu nennen.

Derartige Messgeräte sind auch als NIR-Messgeräte aus dem Stand der Technik bereits vielfältig bekannt. Derartige Messgeräte besitzen eine Sonde, welche mithilfe von Glasfasern oder anderen Faserleitern Licht in den Produktionsbehälter transportieren, welches dort von dem zu beobachtenden Produkt zurückgeworfen, wieder über die Glasfasern durch die Sonde zurück zu einem Messaufnehmer geleitet werden und im Bereich des Messaufnehmers schließlich in Bezug auf das Spektrum ausgewertet werden.

Hierbei treten jedoch im Stand der Technik regelmäßig einige Probleme auf. Zum einen erhitzt sich durch die Einwirkung des verwendeten Lichts, üblicherweise weises Halogenlicht, welches ein breites, gleichmäßiges Spektrum besitzt, die verwendeten Glasfasern und ändern hierbei mit steigender Temperatur ihre optischen Eigenschaften. Zudem sind die Glasfasern nicht für den gesamten Spektralbereich geeignet, so dass für die verschiedenen Spektralbereiche unterschiedliche Fasern und entsprechend unterschiedliche Sonden und Sensoren verwendet werden müssen. Dies führt zu einem erheblichen Aufwand, wobei zudem die Problematik besteht, dass die Sonde in ihrem Querschnitt jeweils abschnittsweise für einzelne Spektralbereiche eingesetzt werden müssen.

Dieses Problem führt dazu, dass bei einem Zusetzen der Lichtöffnung einer Glasfaser mit einem Korn aus der Produktion diese sogleich vollständig blockiert wird und je nachdem ob die Spektraleigenschaften dieses Korns den gewünschten entsprechen oder eben nicht entsprechen eine entsprechende Fehlermeldung bringt. Soweit das Spektrum dieses Korns dem gewünschten Produkt entspricht wird sofort hieraus geschlossen, dass der Homogenitätspunkt der Mischung in dem Produktionsbehälter erreicht ist und die weitere Mischung abgebrochen. Dies führt zu einem unbrauchbaren Produkt. Umgekehrt wird bei einem Zusetzen mit einem Korn, welches nicht der gewünschten Zusammensetzung entspricht, der Mischvorgang niemals abgebrochen, da eine Veränderung sich mit der Zeit nicht mehr einstellt. Auch dies führt letzten Endes dazu, dass eine sinnvolle Kontrolle des Produktes nicht erfolgen kann.

Ferner besteht in Bezug auf die üblicherweise verwendeten Glasfasern die Problematik, dass diese eine relativ hohe Dämpfung haben und insbesondere im Bereich optischer Ein- oder Auskopplungen das Signal um 10 bis 20 % je Verbindung verschlechtern können.

Der vorliegenden Erfindung liegt vor dem Hintergrund dieses Standes der Technik die Aufgabe zu Grunde, ein NIR-Messgerät zu schaffen, welches keine Begrenzung in Bezug auf die verwendeten Wellenlängen besitzt, also lediglich einen einzigen Zugang für sämtliche Wellenlängen benötigt. Ferner soll die vorgeschlagene Lösung eine Unabhängigkeit von Temperaturempfindlichkeiten bringen, Verluste mindern und den beschriebenen Effekt eines Zusetzens der Lichtleitung mit einem einzelnen Korn verhindern.

Dies gelingt durch ein NIR-Messgerät gemäß den Merkmalen der unabhängigen Ansprüche. Weitere, sinnvolle Ausgestaltungen eines derartigen NIR-Messgerätes können den Unteransprüchen entnommen werden.

Erfindungsgemäß ist vorgesehen, dass als Sonde eine Hohlröhre eingesetzt wird, welche in einem Zugang des Produktionsbehälters eingeführt werden kann. Idealerweise handelt es sich hierbei um einen standardisierten Zugang, wie beispielsweise den bekannten Ingold-Port. Die Sonde, welche als Hohlröhre ausgeführt ist, weist auf ihrer Produktseite, also der Seite der Hohlröhre, welche in den Produktionsbehälter eingeführt ist, ein endständiges, schräg gestelltes Fenster auf, welches beispielsweise aus Glas oder einem anderen transparenten Material hergestellt sein kann. Aufgrund dieser Schrägstellung des endständigen Fensters ist es ermöglicht, eine Lichtquelle in die Hohlröhre zu richten, ohne dass die Reflektion, welche durch die Hohlröhre hindurch zurückgeworfen wird, ein Bild der Lichtquelle als solcher darstellt. Vielmehr wird aufgrund der Schrägstellung des endständigen Fensters das Licht relativ gleichmäßig in den Produktionsbehälter eingeleitet und es wird lediglich die Reflexion des von dem Produkt zurückgeworfenen Lichtes durch die Hohlröhre zurückgeworfen.

Hierzu ist eine Lichtquelle vorgesehen, deren Licht in die Hohlröhre eingeleitet wird. Bei einer derartigen Lichtquelle kann es sich beispielsweise um eine Halogenlampe handeln, welche ein besonders gleichmäßiges Spektrum weißen Lichtes imitiert. Das Licht fällt von der Lichtquelle letzten Endes in die Hohlröhre hinein, dringt durch das Fenster und wird am Produkt reflektiert. Von dort aus fällt das Licht zurück durch das Fenster und schließlich auf einen im Bereich des wieder reflektierten Lichtstrahls angeordneten Messaufnehmer, beispielsweise eine Kamera, mit welcher der Produktstrom beobachtet, ausgewertet und eine Verschmutzung auf dem Fenster erfasst werden kann.

Eine Alternative hierzu sieht vor, dass vor dem Fenster nochmals in einigem Abstand ein Reflektor angeordnet ist. In dem Fall, dass ein Medium weitgehend transparent ist und daher kaum Reflexionen zurückwerfen würde, kann ein solcher Reflektor eingesetzt werden, um eine definierte Reflektion zu ermöglichen. Die Werte des Reflektors müssen anschließend bei der Auswertung des Spektrums rechnerisch berücksichtigt werden.

In konkreter Ausgestaltung kann die Lichtquelle zunächst auf einen Spiegel gerichtet werden, welcher das von der Lichtquelle auf den Spiegel einfallende Licht in die Hohlröhre der Sonde einleitet. In diesem Fall ist es vorgesehen, den Spiegel als Lochblende auszugestalten, so dass dieser bevorzugtermaßen in seiner Mitte ein Loch aufweist. Das durch die Hohlröhre zurückgeworfene Licht fällt dann auf den Spiegel und dort insbesondere auf das freigelassene Loch, hinter welchem der Messaufnehmer angeordnet ist. Auf diese Art und Weise ist sichergestellt, dass eine Beeinflussung des Messaufnehmers durch das Licht der Lichtquelle nicht stattfindet.

Aufgrund der großen Erhitzung des Spiegels durch die Einwirkung des von der Lichtquelle emittierten Lichtes ist mit einigem Vorteil der Messaufnehmer, welcher hinter dem Spiegel angeordnet ist, von diesem thermisch entkoppelt. Dies schützt den Messaufnehmer vor Beschädigungen.

Eine weitere, besonders bevorzugte Ausgestaltung sieht ein schräggestelltes Fenster aus Saphirglas vor. Dieses ist neben einer besonders hohen Kratzfestigkeit auch deutlich druckfester als herkömmlich verwendetes Glas und zudem reinigungsmittelbeständig, so dass eine Eintrübung mit der Zeit vermieden wird.

Die vorstehend beschriebene Erfindung wird im Folgenden anhand eines Ausführungsbeispiels näher erläutert.

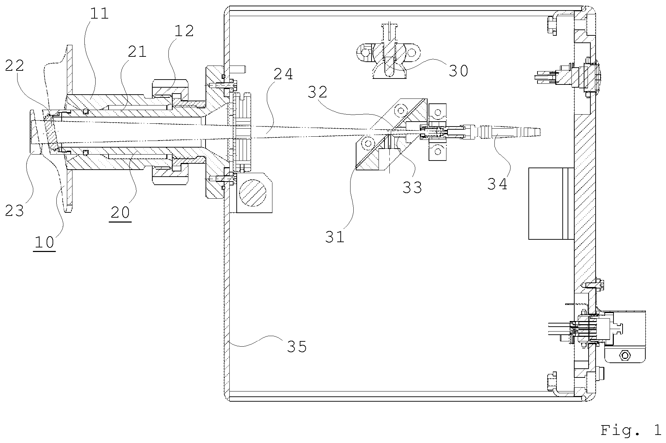

Es zeigt
- Figur 1: ein NIR-Messgerät mit einer als Hohlröhre ausgeführten Sonde, welche an einem Zugang eines Produktionsbehälters befestigt ist in einer seitlichen Schnittdarstellung.

Figur 1 zeigt eine Schnittdarstellung eines NIR-Messgerätes, welches im Wesentlichen in einem Gehäuse 35 aufgenommen ist. Das NIR-Messgerät wird über einen Standard-Zugang 11 an einen Produktionsbehälter 10 befestigt. Es dient zur Überwachung des Grades der Durchmischung eines in dem Produktionsbehälter 10 geführten Produktes, sowie auch zur Überprüfung von Konzentrationen innerhalb des überwachten Produktes. Bei dem Produktionsbehälter kann es sich hierbei insoweit sowohl um eine Förderröhre, als auch um einen Reaktionsbehälter, Mischbehälter oder Rührbehälter handeln. In den Standard-Zugang 11 ist eine mit dem Gehäuse 35 verbundene Sonde 20 eingesteckt, welche über eine Überwurfmutter 12 mit den Standard-Zugang 11 verbunden ist. Dem Gehäuse 35 ist zudem eine Lichtquelle in Form einer Halogenlampe 30 zugeordnet, deren Licht auf einen Spiegel 31 gelenkt wird. Der Spiegel ist derart ausgerichtet, dass das von der Halogenlampe 30 einfallende Licht über dem Spiegel 31 in die Sonde 20 gerichtet wird. Die Sonde 20 ist dabei als Hohlröhre 21 ausgestaltet, in welcher lediglich Luft, ein Gas oder ein Vakuum enthalten ist. Endständig ist die Hohlröhre 21 abgeschlossen durch ein Fenster 22, welches gegenüber der Hohlröhre 21 schräg gestellt ist, deren Flächennormale also eine Mittelachse der Hohlröhre 21 schneidet. Durch dieses Fenster 22 hindurch fällt das von der Halogenlampe 30 emittierte Licht auf das hinter dem Fenster 22 liegende Produkt. Sofern es sich um ein transparentes Produkt handelt, kann in einigem Abstand zu dem Fenster 22 auch ein Reflektor 23 vorgesehen sein, welcher anstelle des in diesem Falle durchscheinenden Produktes das einfallende Licht reflektiert. Das in jedem Fall durch die Hohlröhre 21 zurückgeworfene Licht fällt in Form eines Lichtkegels 24 wiederum auf den Spiegel 31, wobei diesem Spiegel 31 im Bereich des Auftreffens des reflektierten Lichtkegels 24 ein Loch 32 aufweist, also als Lochblende ausgestaltet ist. Hinter dem Loch 32 ist ein Lichtkanal 33 vorgesehen, hinter welchem wiederum ein Messaufnehmer 34 angeordnet ist, welcher das empfangene Licht aufnehmen und Informationen zur weiteren Auswertung weiterleiten kann. Der Messaufnehmer 34 ist von dem Spiegel 31, welcher durch die andauernde Beaufschlagung mit dem Licht der Halogenlampe 30 sowie aufgrund der Temperatur des überwachten Produkts stark erwärmt wird, thermisch entkoppelt.

Vorstehend beschrieben ist somit ein NIR-Messgerät, welches eine Alternative zu der Verwendung von Glasfasern oder anderen Fasern zur Übertragung des Lichtes bei einer NIR-Messung vorschlägt und hierdurch eine vereinfachte Bedienung sowie eine Verbesserung der Messung mit sich bringt.

### BEZUGSZEICHENLISTE

- 10: Produktionsbehälter
- 11: Standard-Zugang
- 12: Überwurfmutter
- 20: Sonde
- 21: Hohlröhre
- 22: Fenster
- 23: Reflektor
- 24: Lichtkegel
- 30: Halogenlampe
- 31: Spiegel
- 32: Loch
- 33: Lichtkanal
- 34: Messaufnehmer
- 35: Gehäuse

## Patentansprüche

1. NIR-Messgerät zur Erfassung von Kenngrößen eines in einem Produktionsbehälter (10) aufgenommenen Produkts, mit einer über einen, vorzugsweise standardisierten, Zugang (11) des Produktionsbehälters (10) mit diesem verbindbaren, in Form einer in den Zugang (11) einführbaren Hohlröhre (21) gestalteten Sonde (20), wobei der Sonde (20) auf einer von dem Produktionsbehälter (10) abgewandten Seite eine Lichtquelle sowie ein Messaufnehmer (34) zugeordnet sind und von der Lichtquelle emittiertes Licht durch die Hohlröhre (21) und ein der Hohlröhre auf einer in den Produktionsbehälter (10) einzuführenden Seite angeordnetes, endständiges Fenster (22) in Form einer transparenten, planparallelen Platte hindurch geleitet wird und zumindest teilweise zurück durch das endständige Fenster (22) und die Hohlröhre (21) auf den Messaufnehmer (34) reflektiert wird, wobei das der Hohlröhre (21) auf der in den Produktionsbehälter (10) einzuführenden Seite als Abschluss zugeordnete endständige Fenster (22) derart schräggestellt ist, dass die Flächennormale der transparenten, planparallelen Platte des endständigen Fensters (22) eine Mittelachse der Hohlröhre (21) schneidet, wobei das von der Lichtquelle emittierte Licht durch die Hohlröhre (21) der Sonde (20) und das schräggestellte, endständige Fenster (22) hindurch auf das in dem Produktionsbehälter (10) vorgehaltene Produkt trifft und von diesem zumindest teilweise zurück durch das schräggestellte, endständige Fenster (22) und die Hohlröhre (21) auf den Messaufnehmer (34) reflektiert wird, **dadurch gekennzeichnet, dass** das NIR-Messgerät einen Spiegel (31) umfasst, die Lichtquelle auf den Spiegel (31) derart ausgerichtet ist, dass die Reflexion des von der Lichtquelle emittierten Lichtes auf ihrer von dem Produktionsbehälter (10) abgewandten Seite in die Hohlröhre (21) einfällt, und der Spiegel (31) als Lochblende mit dem in Reflexionsrichtung des durch die Hohlröhre (21) hindurch reflektierten Lichtes geradlinig dahinterliegenden Messaufnehmer (34) ausgestaltet ist.

2. NIR-Messgerät zur Erfassung von Kenngrößen eines in einem Produktionsbehälter (10) aufgenommenen Produkts, mit einer über einen, vorzugsweise standardisierten, Zugang (11) des Produktionsbehälters (10) mit diesem verbindbaren, in Form einer in den Zugang (11) einführbaren Hohlröhre (21) gestalteten Sonde (20), , wobei der Sonde (20) auf einer von dem Produktionsbehälter (10) abgewandten Seite eine Lichtquelle sowie ein Messaufnehmer (34) zugeordnet sind und von der Lichtquelle emittiertes Licht durch die Hohlröhre (21) und ein der Hohlröhre auf einer in den Produktionsbehälter (10) einzuführenden Seite angeordnetes, endständiges Fenster (22) in Form einer transparenten, planparallelen Platte hindurch geleitet wird und zumindest teilweise zurück durch das endständige Fenster (22) und die Hohlröhre (21) auf den Messaufnehmer (34) reflektiert wird, wobei das der Hohlröhre (21) auf der in den Produktionsbehälter (10) einzuführenden Seite als Abschluss zugeordnete endständige Fenster (22) derart schräggestellt ist, dass die Flächennormale der transparenten, planparallelen Platte des endständigen Fensters (22) eine Mittelachse der Hohlröhre (21) schneidet, wobei parallel zu dem schräggestellten, endständigen Fenster (22) ein von diesem beabstandeter Reflektor (23) vorgesehen ist, wobei das von der Lichtquelle emittierte Licht durch die Hohlröhre (21) der Sonde (20) und das schräggestellte, endständige Fenster (22) hindurch auf den Reflektor (23) trifft und von diesem zumindest teilweise zurück durch das schräggestellte, endständige Fenster (22) und die Hohlröhre (21) auf den Messaufnehmer (34) reflektiert wird, **dadurch gekennzeichnet, dass** das NIR-Messgerät einen Spiegel (31) umfasst, die Lichtquelle auf den Spiegel (31) derart ausgerichtet ist, dass die Reflexion des von der Lichtquelle emittierten Lichtes auf ihrer von dem Produktionsbehälter (10) abgewandten Seite in die Hohlröhre (21) einfällt, und der Spiegel (31) als Lochblende mit dem in Reflexionsrichtung des durch die Hohlröhre (21) hindurch reflektierten Lichtes geradlinig dahinterliegenden Messaufnehmer (34) ausgestaltet ist.

3. NIR-Messgerät gemäß einem der vorhergehenden Ansprüche, **dadurch gekennzeichnet, dass** der Spiegel (31) von dem Messaufnehmer (34) thermisch entkoppelt ist.

4. NIR-Messgerät gemäß einem der vorhergehenden Ansprüche, **dadurch gekennzeichnet, dass** das schräggestellte Fenster aus Saphirglas hergestellt ist.

5. NIR-Messgerät gemäß einem der vorhergehenden Ansprüche, **dadurch gekennzeichnet, dass** es sich bei der Lichtquelle um eine Halogenlampe (30) zur Emission weißen Lichts handelt.

## Claims

1. NIR measuring device for recording parameters of a product accommodated in a production container (10), comprising a probe (20) which can be connected to the production container (10) via a preferably standardized access (11) of said container and which is designed as a hollow tube (21) that can be inserted into the access (11), a light source and a measuring sensor (34) being assigned to the probe (20) on a side remote from the production container (10) and light emitted by the light source being passed through the hollow tube (21) and an end window (22) which is arranged on the hollow tube on a side to be inserted into the production container (10) and which is in the form of a transparent, plane-parallel plate, and being at least partially reflected back through the end window (22) and the hollow tube (21) onto the sensor (34), the end window (22) assigned to the hollow tube (21) on the side to be inserted into the production container (10) as a closure being inclined in such a way that the surface normal of the transparent, plane-parallel plate of the end window (22) intersects a central axis of the hollow tube (21), the light emitted by the light source striking the product held in the production container (10) through the hollow tube (21) of the probe (20) and the inclined, end window (22) and, from here, being at least partially reflected back through the inclined, end window (22) and the hollow tube (21) onto the sensor (34), **characterized in that** the NIR measuring device comprises a mirror (31), the light source being aligned on the mirror (31) in such a way that the reflection of the light emitted by the light source is incident into the hollow tube (21) on the side thereof remote from the production container (10) and the mirror (31) is designed as a pinhole with the measuring sensor (34) in a straight line behind said pinhole in the direction of reflection of the light reflected through the hollow tube (21).

2. NIR measuring device for recording parameters of a product accommodated in a production container (10), comprising a probe (20) which can be connected to the production container (10) via a preferably standardized access (11) of said container and which is designed as a hollow tube (21) that can be inserted into the access (11), a light source and a measuring sensor (34) being assigned to the probe (20) on a side remote from the production container (10) and light emitted by the light source being passed through the hollow tube (21) and an end window (22) which is arranged on the hollow tube on a side to be inserted into the production container (10) and which is in the form of a transparent, plane-parallel plate, and being at least partially reflected back through the end window (22) and the hollow tube (21) onto the sensor (34), the end window (22) assigned to the hollow tube (21) on the side to be inserted into the production container (10) as a closure being inclined in such a way that the surface normal of the transparent, plane-parallel plate of the end window (22) intersects a central axis of the hollow tube (21), a reflector (23) spaced apart from the inclined, end window (22) being provided parallel thereto, the light emitted by the light source striking the reflector (23) through the hollow tube (21) of the probe (20) and the inclined, end window (22) and, from here, being at least partially reflected back through the inclined, end window (22) and the hollow tube (21) onto the sensor (34), **characterized in that** the NIR measuring device comprises a mirror (31), the light source being aligned on the mirror (31) in such a way that the reflection of the light emitted by the light source is incident into the hollow tube (21) on the side thereof remote from the production container (10) and the mirror (31) is designed as a pinhole with the measuring sensor (34) in a straight line behind said pinhole in the direction of reflection of the light reflected through the hollow tube (21).

3. NIR measuring device according to either of the preceding claims, **characterized in that** the mirror (31) is thermally decoupled from the measuring sensor (34).

4. NIR measuring device according to any of the preceding claims, **characterized in that** the inclined window is made of sapphire glass.

5. NIR measuring device according to any of the preceding claims, **characterized in that** the light source is a halogen lamp (30) for emitting white light.

## Revendications

1. Dispositif de mesure NIR destiné à la détection de grandeurs caractéristiques d'un produit reçu dans un récipient de production (10), comportant une sonde (20) pouvant être reliée au récipient de production (10) par l'intermédiaire d'un accès (11), de préférence normalisé, de celui-ci et conçue sous la forme d'un tube creux (21) pouvant être introduit dans l'accès (11), une source lumineuse et un capteur de mesure (34) étant associés à la sonde (20) sur un côté opposé au récipient de production (10) et de la lumière émise par la source lumineuse étant dirigée à travers le tube creux (21) et une fenêtre terminale (22) du tube creux sous forme d'une plaque plane parallèle transparente et disposée sur un côté à introduire dans le récipient de production (10), et étant réfléchie au moins partiellement en retour sur le capteur de mesure (34) à travers la fenêtre terminale (22) et le tube creux (21),
la fenêtre terminale (22) du tube creux (21) sur le côté à insérer dans le récipient de production (10) et associée en tant que fermeture étant inclinée de telle sorte que la normale de surface de la plaque plane parallèle transparente de la fenêtre terminale (22) coupe un axe central du tube creux (21), la lumière émise par la source lumineuse à travers le tube creux (21) de la sonde (20) et la fenêtre terminale (22) inclinée frappant le produit contenu dans le récipient de production (10) et étant au moins partiellement réfléchie en retour sur le capteur de mesure (34) depuis ledit produit à travers la fenêtre terminale (22) inclinée et le tube creux (21), **caractérisé en ce que** le dispositif de mesure NIR comprend un miroir (31), la source lumineuse est alignée sur le miroir (31) de telle sorte que la réflexion de la lumière émise par la source lumineuse tombe dans le tube creux (21), sur son côté opposé au récipient de production (10), et le miroir (31) est conçu en tant que diaphragme perforé comportant le capteur de mesure (34) se trouvant derrière de manière rectiligne dans le sens de réflexion de la lumière réfléchie à travers le tube creux (21).

2. Dispositif de mesure NIR destiné à la détection de grandeurs caractéristiques d'un produit reçu dans un récipient de production (10), comportant un sonde (20) pouvant être reliée au récipient de production (10) par l'intermédiaire d'un accès (11), de préférence normalisé, de celui-ci et conçue sous la forme d'un tube creux (21) pouvant être inséré dans l'accès (11), une source lumineuse et un capteur de mesure (34) étant associés à la sonde (20) sur un côté opposé au récipient de production (10) et de la lumière émise par la source lumineuse étant dirigée à travers le tube creux (21) et une fenêtre terminale (22) du tube creux sous forme d'une plaque plane parallèle transparente et disposée sur un côté à introduire dans le récipient de production (10), et étant réfléchie au moins partiellement en retour sur le capteur de mesure (34) à travers la fenêtre terminale (22) et le tube creux (21),
la fenêtre terminale (22) du tube creux (21) sur le côté à insérer dans le récipient de production (10) et associée en tant que fermeture étant inclinée de telle sorte que la normale de surface de la plaque plane parallèle transparente de la fenêtre terminale (22) coupe un axe central du tube creux (21), un réflecteur (23) parallèle à la fenêtre terminale (22) inclinée et espacé de celle-ci étant prévu, la lumière émise par la source lumineuse à travers le tube creux (21) de la sonde (20) et la fenêtre terminale (22) inclinée frappant le réflecteur (23) et étant au moins partiellement réfléchie en retour depuis celui-ci sur le capteur de mesure (34) à travers la fenêtre terminale (22) inclinée et le tube creux (21), **caractérisé en ce que** le dispositif de mesure NIR comprend un miroir (31), la source lumineuse est alignée sur le miroir (31) de telle sorte que la réflexion de la lumière émise par la source lumineuse tombe dans le tube creux (21), sur son côté opposé au récipient de production (10), et le miroir (31) est conçu en tant que diaphragme perforé comportant le capteur de mesure (34) se trouvant derrière de manière rectiligne dans le sens de réflexion de la lumière réfléchie à travers le tube creux (21).

3. Dispositif de mesure NIR selon l'une des revendications précédentes, **caractérisé en ce que** le miroir (31) est découplé du capteur de mesure (34) de manière thermique.

4. Dispositif de mesure NIR selon l'une des revendications précédentes, **caractérisé en ce que** la fenêtre inclinée est fabriquée à partir de verre saphir.

5. Dispositif de mesure NIR selon l'une des revendications précédentes, **caractérisé en ce que** la source lumineuse est une lampe halogène (30) destinée à l'émission de lumière blanche.
